# EUROPEAN PATENT APPLICATION

(11) **EP 4 212 576 A1**
(43) Date of publication of application: **19.07.2023**
(21) Application number: 21866694.9
(22) Date of filing: 06.09.2021
(51) Int. Cl.: C08J 3/05, C08L 101/08

(54) **RESIN AQUEOUS DISPERSION COMPOSITION AND METHOD FOR PRODUCING SAME**

(30) Priority: 11.09.2020 JP 2020153143
(71) Applicant: Sumitomo Seika Chemicals Co., Ltd., Kako-gun, Hyogo 675-0145 (JP)
(72) Inventor: MIZUHASHI, Toshinari, Himeji-shi, Hyogo 672-8076 (JP)
(74) Representative: Vossius & Partner Patentanwälte Rechtsanwälte mbB
(86) International application number: PCT/JP2021/032575
(87) International publication number: WO 2022/054735

(57) **Abstract**

Provided are a dispersion composition in which a resin having carboxyl groups is dispersed, and which is a resin aqueous dispersion composition having a relatively high resin concentration but a relatively low viscosity, and a method for producing the same.

## Description

### Technical Field

The present disclosure relates to a resin aqueous dispersion composition and a method for producing the same. The contents of all of the documents disclosed in the present specification are incorporated herein by reference.

### Background Art

Various methods have been researched and developed as methods for preparing dispersion compositions (dispersions) in which a resin having carboxyl groups is dispersed. For example, PTL 1 discloses a method in which a polyamide having terminal carboxyl groups and having a ratio of terminal carboxyl groups to terminal amino groups within a specific range is added to an aqueous dispersion medium containing a specific amount of a basic substance, and the mixture is mixed, while heating to melt the polyamide, to disperse the polyamide.

### Citation List

### Patent Literature

PTL 1: JP2000-302966A

### Summary of Invention

### Technical Problem

Resin aqueous dispersion compositions tend to have a higher viscosity as their resin concentration increases. However, considering subsequent handleability, it is preferable that the compositions have a high resin concentration but a relatively low viscosity.

### Solution to Problem

In order to prepare a dispersion composition in which a resin having carboxyl groups is dispersed, the present inventors tried to heat and mix the resin with a basic substance and an aqueous dispersion medium to disperse the resin in the aqueous dispersion medium, and further add an aqueous liquid thereto for dilution to reduce the viscosity, thereby obtaining a resin aqueous dispersion composition having a relatively high resin concentration but a relatively low viscosity.

However, contrary to expectations, the viscosity was not reduced as expected when diluting with an aqueous liquid. In some cases, the resin aggregated, and the expected resin aqueous dispersion composition could not be obtained.

Accordingly, further studies were carried out in order to obtain a dispersion composition in which a resin having carboxyl groups is dispersed, and which is a resin aqueous dispersion composition having a relatively high resin concentration but a relatively low viscosity.

The present inventors then found the possibility that in the above method, the temperature of the dispersion composition when performing the dilution operation by adding an aqueous liquid is important for obtaining a resin aqueous dispersion composition having a relatively high resin concentration but a relatively low viscosity. Then, further improvements were made.

For example, the present disclosure encompasses the subject matter described in the following items.
Item 1. A method for producing a resin aqueous dispersion composition, comprising:
   (B) mixing a resin composition comprising a resin having carboxyl groups at its terminals, a basic substance, and an aqueous dispersion medium, with a diluent with a temperature lower than the resin composition,
   the resin composition containing the resin in a molten state and having a temperature within a range of ±50°C of the melting point of the resin.
Item 2. A method for producing a resin aqueous dispersion composition, comprising:
   (A) adjusting the temperature of a resin composition comprising a resin having carboxyl groups at its terminals, a basic substance, and an aqueous dispersion medium to a temperature equal to or higher than the melting point of the resin; and
   (B) mixing the resin composition with a temperature within a range of ±50°C of the melting point of the resin, with a diluent with a temperature lower than the resin composition.
Item 3. The method according to Item 1, further comprising, before step (B):
   (α) cooling the resin composition to a temperature within a range of ±50°C of the melting point of the resin.
Item 4. The method according to Item 2, further comprising, between steps (A) and (B):
   (α) cooling the resin composition to a temperature within a range of ±50°C of the melting point of the resin.
Item 5. The method according to any one of Items 1 to 4, wherein when the temperature of a mixed composition obtained in step (B) is higher than a temperature lower by 50°C than the melting point of the resin, the method further comprises:
   (β) mixing the mixed composition with a diluent with a temperature lower than the mixed composition.
Item 6. The method according to any one of Items 1 to 5, wherein the resin having carboxyl groups at its terminals has a melting point of 50 to 300°C.
Item 7. The method according to any one of Items 1 to 6, wherein in step (B), the temperature of the resin composition mixed with the diluent is 70 to 200°C.
Item 8. The method according to any one of Items 1 to 7, wherein the resin having carboxyl groups at its terminals is a polyamide.
Item 9. The method according to Item 8, wherein the polyamide has a ratio of terminal carboxyl groups to terminal amino groups of 66/34 to 92/8, and the terminal carboxyl groups are present in an amount of 90 to 170 mmol per kg.
Item 10. The method according to any one of Items 1 to 9, wherein in the resin composition comprising a resin having carboxyl groups at its terminals, a basic substance, and an aqueous dispersion medium to be subjected to step (B), the resin is melted and dispersed in the aqueous dispersion medium.
Item 11. The method according to any one of Items 1 to 10, wherein the resin aqueous dispersion composition is an emulsion composition.
Item 12. An aqueous dispersion composition of a polyamide, the resin dispersed in the composition having a median particle size of 0.1 to 10 µm, and the composition having a resin concentration of 20 to 60 mass% and a viscosity of 2000 mPa·s or less.
Item 13. The composition according to Item 12, which is an aqueous dispersion composition of a polyamide, wherein the resin dispersed in the composition has a median particle size of 0.2 to 5 µm, and the composition has a resin concentration of 30 to 50 mass% and a viscosity of 100 to 1000 mPa·s.
Item 14. The composition according to Item 12 or 13, wherein the polyamide has a ratio of terminal carboxyl groups to terminal amino groups of 66/34 to 92/8, and the terminal carboxyl groups are present in an amount of 90 to 170 mmol per kg.

### Advantageous Effects of Invention

Provided are a dispersion composition in which a resin having carboxyl groups is dispersed, and which is a resin aqueous dispersion composition having a relatively high resin concentration but a relatively low viscosity, and a method for preparing the composition.

The resin aqueous dispersion composition can be prepared without using an organic solvent. Therefore, the resin aqueous dispersion composition can be preferably an organic solvent-free composition.

### Description of Embodiments

Below, each embodiment encompassed by the present disclosure is described in more detail. The present disclosure preferably encompasses, for example, a specific resin aqueous dispersion composition and a method for producing the same; however, the present disclosure is not limited to these, and encompasses everything disclosed herein and recognizable to those skilled in the art.

The method for producing a resin aqueous dispersion composition encompassed by the present disclosure comprises (B) mixing a mixed composition comprising a resin having carboxyl groups, a basic substance, and an aqueous dispersion medium, with a diluent with a temperature lower than the mixed composition, the resin composition containing the resin in a molten state and having a temperature within a range of ±50°C of the melting point of the resin (hereinafter also referred to as "step (B)").

Below, the method for producing a resin dispersion composition encompassed by the present disclosure is also referred to as "the production method of the present disclosure." Further, for example, a resin dispersion composition that can be produced by the production method of the present disclosure is also referred to as "the composition of the present disclosure."

The resin having carboxyl groups is preferably a resin having carboxyl groups at its terminals. The resin having carboxyl groups at its terminals is preferably a polyamide. Resins having carboxyl groups can be used singly or in combination of two or more.

As the polyamide, a known one or one produced by a known method can be used. Commercially available polyamides may also be used.

More specific examples include polyamides produced by polycondensation of diamines and dicarboxylic acids, polycondensation of ω-amino-ω' carboxylic acids, ring-opening polymerization of cyclic lactams, or the like. In other words, polyamides obtained by polycondensation of diamines and dicarboxylic acids, polyamides obtained by polycondensation of ω-amino-ω' carboxylic acids, polyamides obtained by ring-opening polymerization of cyclic lactams, and the like can be used. A dicarboxylic acid or monocarboxylic acid can be used as a polymerization regulator in the polycondensation or ring-opening polymerization.

A polyamide obtained by polycondensation of a diamine and a dicarboxylic acid is, in other words, a polyamide having the diamine and dicarboxylic acid as monomer constituent units. A polyamide obtained by polycondensation of a ω-amino-ω' carboxylic acid is, in other words, a polyamide having the ω-amino-ω' carboxylic acid as a monomer constituent unit. A polyamide obtained by ring-opening polymerization of a cyclic lactam is, in other words, a polyamide having the cyclic lactam as a monomer constituent unit.

Examples of diamines include ethylenediamine, trimethylenediamine, tetramethylenediamine, pentamethylenediamine, hexamethylenediamine, 1,7-diaminoheptane, 1,8-diaminooctane, 1,9-diaminononane, 1,10-diaminodecane, phenylenediamine, meta-xylylenediamine, and the like.

Examples of dicarboxylic acids include glutaric acid, adipic acid, pimelic acid, suberic acid, azelaic acid, sebacic acid, nonanedicarboxylic acid, decanedicarboxylic acid, tetradecanedicarboxylic acid, octadecanedicarboxylic acid, fumaric acid, phthalic acid, xylylenedicarboxylic acid, dimer acid (C₃₆ unsaturated dicarboxylic acid synthesized from unsaturated fatty acids with linoleic and oleic acids as main components), and the like.

Examples of ω-amino-ω' carboxylic acids include 6-aminocaproic acid, 7-aminoheptanoic acid, 9-aminononanoic acid, 11-aminoundecanoic acid, 12-aminododecanoic acid, and the like.

Examples of cyclic lactams include ε-caprolactam, ω-enantholactam, ω-lauryllactam, and the like.

The dicarboxylic acid used as the polymerization regulator is the same as the dicarboxylic acid used in the production of the polyamide. Examples include glutaric acid, adipic acid, pimelic acid, suberic acid, azelaic acid, sebacic acid, nonanedicarboxylic acid, decanedicarboxylic acid, tetradecanedicarboxylic acid, octadecanedicarboxylic acid, fumaric acid, phthalic acid, xylylenedicarboxylic acid, dimer acid, and the like. Further, examples of monocarboxylic acids include caproic acid, heptanoic acid, nonanoic acid, undecanoic acid, dodecanoic acid, and the like.

In the present invention, among polyamides, a polyamide having a constituent unit of at least one, or two or more members selected from the group consisting of -[NH(CH₂)₅CO]-, - [NH(CH₂)₆NHCO(CH₂)₄CO]-, - [NH(CH₂)₆NHCO(CH₂)₈CO]-, - [NH(CH₂)₁₀CO]-, - [NH(CH₂)ₙCO]-, and - [NH(CH₂)₂NHCO-D-CO]- (wherein D is C₃₄ unsaturated hydrocarbon) is particularly preferably used.

An example of such polyamides is nylon. Specific examples include 6-nylon, 66-nylon, 610-nylon, 11-nylon, 12-nylon, 6/66 copolymer nylon, 6/610 copolymer nylon, 6/11 copolymer nylon, 6/12 copolymer nylon, 6/66/11 copolymer nylon, 6/66/12 copolymer nylon, 6/66/11/12 copolymer nylon, 6/66/610/11/12 copolymer nylon, and the like.

Other examples of usable polyamides include dimer acid-based polyamides and polyamide elastomers. Specific examples of polyamide elastomers include a polyamide elastomer that is a copolymer of nylon and polyester, or a copolymer of nylon and polyalkylene ether glycol. Examples of the polyalkylene ether glycol include polyethylene oxide glycol, polypropylene oxide glycol, polytetramethylene oxide glycol, polyhexamethylene oxide glycol, and the like. Examples of the polyester include polyethylene terephthalate, polytrimethylene terephthalate, polybutylene terephthalate, polyethylene naphthalate, polytrimethylene naphthalate, polybutylene naphthalate, and the like.

Polyamides can be used singly or in combination of two or more. The polyamide elastomer is not particularly limited, but is preferably a block copolymer containing polyamide blocks and polyether blocks. In particular, a block copolymer having a structure in which a polyamide and a polyether are copolymerized is preferred, and a block copolymer consisting of a structure in which a polyamide and a polyether are copolymerized is particularly preferred. Examples of constituents of the polyether block include glycol compounds, such as polyethylene oxide glycol, polypropylene oxide glycol, polytetramethylene oxide glycol, and polyhexamethylene oxide glycol; diamine compounds, such as polyether diamine; and the like. Two or more of these constituents may be used. Examples of such polyamide elastomers include several types with different molecular structures at the bonds between the polyamide blocks and the polyether blocks, i.e., bonding forms, such as a polyether block amide copolymer having a bonding form of "(polyamide block)-CO-NH-(polyether block)," a polyether ester block amide copolymer having a bonding form of "(polyamide block)-CO-O-(polyether block)," and the like.

Although it is not particularly limited, the polyamide used in the production method of the present disclosure preferably has a ratio of terminal carboxyl groups to terminal amino groups (terminal carboxyl groups/terminal amino groups) in the range of 60/40 to 100/0. The upper or lower limit of this range may be, for example, 61/39, 62/38, 63/37, 64/36, 65/35, 66/34, 67/33, 68/32, 69/31, 70/30, 71/29, 72/28, 73/27, 74/26, 75/25, 76/24, 77/23, 78/22, 79/21, 80/20, 81/19, 82/18, 83/17, 84/16, 85/15, 86/14, 87/13, 88/12, 89/11, 90/10, 91/9, 92/8, 93/7, 94/6, 95/5, 96/4, 97/3, 98/2, or 99/1. For example, this range may be 66/34 to 92/8. This ratio is (mol/g) ratio. Quantitative determination of terminal carboxyl groups and terminal amino groups is performed by titration. Further, in the preparation of the polyamide, the ratio of terminal carboxyl groups to terminal amino groups can be adjusted by adjusting the amount of the polymerization regulator (dicarboxylic acid, monocarboxylic acid, etc.) used in the polycondensation or ring-opening polymerization.

Although it is not particularly limited, an embodiment of the present disclosure also includes not using a copolymer containing an α,β-unsaturated carboxylic acid or an ester thereof as a constituent unit as the resin having carboxyl groups.

Examples of α,β-unsaturated carboxylic acids include acrylic acid, methacrylic acid, crotonic acid, maleic acid, fumaric acid, itaconic acid, and the like. In particular, (meth)acrylic acids (i.e., methacrylic acid and/or acrylic acid) can be used. Examples of esters of α,β-unsaturated carboxylic acids include alkyl esters having 1 to 10 (1, 2, 3, 4, 5, 6, 7, 8, 9, or 10) carbon atoms. The alkyl moiety of the alkyl esters may be liner or branched. Specific examples of esters of α,β-unsaturated carboxylic acids include methyl esters, ethyl esters, butyl (in particular, n-butyl) esters, 2-ethylhexyl esters, and the like. Examples of esters of α,β-unsaturated carboxylic acids include 2-methylaminoethyl esters, hydroxyethyl esters (in particular, 2-hydroxyethyl esters), and the like. Among these, methyl (meth)acrylate, ethyl (meth)acrylate, and butyl (meth)acrylate are particularly usable as esters of α,β-unsaturated carboxylic acids.

Examples of monomers other than α,β-unsaturated carboxylic acids or esters thereof include ethylene, propylene, butene, isobutene, butadiene, isoprene, styrene, and the like.

Specific examples of the copolymer containing an α,β-unsaturated carboxylic acid or an ester thereof as a constituent unit include a copolymer of an ethylene/α,β-unsaturated carboxylic acid or an ester thereof, a copolymer of a styrene/α,β-unsaturated carboxylic acid or an ester thereof, and the like. Among these, an ethylene/α,β-unsaturated carboxylic acid copolymer is particularly usable. More specific examples include an ethylene/(meth)acrylic acid copolymer, a styrene/(meth)acrylic acid ester copolymer, a styrene/(meth)acrylic acid/(meth)acrylic acid ester copolymer, and the like. In particular, an ethylene/α,β-unsaturated carboxylic acid copolymer is usable, and more specific examples include an ethylene/(meth)acrylic acid copolymer.

Examples of basic substances include alkali metal hydroxides such as sodium hydroxide and potassium hydroxide, ammonia, amine compounds, and the like. In particular, alkali metal hydroxides such as sodium hydroxide and potassium hydroxide are preferably used, in terms of their dispersion effect. The basic substances can be used singly or in combination of two or more.

The amount of the basic substance used is preferably 0.2 to 3 mol per mol of carboxyl groups in the resin having carboxyl groups. The upper or lower limit of this range may be, for example, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, or 2.9 mol. For example, this range may be 0.4 to 2 mol or 0.6 to 1.5 mol.

When the resin having carboxyl groups is a resin having carboxyl groups at its terminals, the amount of the basic substance used is preferably 0.2 to 3 mol per mol of terminal carboxyl groups in the resin having carboxyl groups at its terminals (preferably a polyamide). The upper or lower limit of this range may be, for example, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, or 2.9 mol. For example, this range may be 0.4 to 2 mol or 0.6 to 1.5 mol.

When the resin having carboxyl groups is a resin having carboxyl groups at its terminals, the amount of terminal carboxyl groups is not particularly limited, and is preferably, for example, 50 to 3000 mmol per kg of the resin (preferably a polyamide). The upper or lower limit of this range may be, for example, 60, 70, 80, 90, 100, 110, 1200, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500, 510, 520, 530, 540, 550, 560, 570, 580, 590, 600, 610, 620, 630, 640, 650, 660, 670, 680, 690, 700, 710, 720, 730, 740, 750, 760, 770, 780, 790, 800, 810, 820, 830, 840, 850, 860, 870, 880, 890, 900, 910, 920, 930, 940, 950, 960, 970, 980, 990, 1000, 1010, 1020, 1030, 1040, 1050, 1060, 1070, 1080, 1090, 1100, 1110, 1120, 1130, 1140, 1150, 1160, 1170, 1180, 1190, 1200, 1210, 1220, 1230, 1240, 1250, 1260, 1270, 1280, 1290, 1300, 1310, 1320, 1330, 1340, 1350, 1360, 1370, 1380, 1390, 1400, 1410, 1420, 1430, 1440, 1450, 1460, 1470, 1480, 1490, 1500, 1510, 1520, 1530, 1540, 1550, 1560, 1570, 1580, 1590, 1600, 1610, 1620, 1630, 1640, 1650, 1660, 1670, 1680, 1690, 1700, 1710, 1720, 1730, 1740, 1750, 1760, 1770, 1780, 1790, 1800, 1810, 1820, 1830, 1840, 1850, 1860, 1870, 1880, 1890, 1900, 1910, 1920, 1930, 1940, 1950, 1960, 1970, 1980, 1990, 2000, 2010, 2020, 2030, 2040, 2050, 2060, 2070, 2080, 2090, 2100, 2110, 2120, 2130, 2140, 2150, 2160, 2170, 2180, 2190, 2200, 2210, 2220, 2230, 2240, 2250, 2260, 2270, 2280, 2290, 2300, 2310, 2320, 2330, 2340, 2350, 2360, 2370, 2380, 2390, 2400, 2410, 2420, 2430, 2440, 2450, 2460, 2470, 2480, 2490, 2500, 2510, 2520, 2530, 2540, 2550, 2560, 2570, 2580, 2590, 2600, 2610, 2620, 2630, 2640, 2650, 2660, 2670, 2680, 2690, 2700, 2710, 2720, 2730, 2740, 2750, 2760, 2770, 2780, 2790, 2800, 2810, 2820, 2830, 2840, 2850, 2860, 2870, 2880, 2890, 2900, 2910, 2920, 2930, 2940, 2950, 2960, 2970, 2980, or 2990 mmol. For example, this range may be 100 to 2000 mmol or 90 to 170 mmol.

Although it is not particularly limited, in an embodiment in which a copolymer containing an α,β-unsaturated carboxylic acid or an ester thereof as a constituent unit is not used as the resin having carboxyl groups, it is preferable that the copolymer is not used and ammonia is not used as the basic substance.

The aqueous dispersion medium can be an organic solvent, but is preferably water. Various types of water, such as tap water, industrial water, ion-exchanged water, deionized water, and pure water, can be used. Deionized water and pure water are particularly preferred. As the aqueous dispersion medium, water to which a pH adjuster, a viscosity modifier, an antifungal agent, etc. are appropriately added, if necessary, may be used.

Although it is not particularly limited, an embodiment of the present disclosure also preferably includes not using an organic solvent as the aqueous dispersion medium. In an embodiment in which an organic solvent is not used as the aqueous dispersion medium and a diluent described later, the fact that it is possible to obtain a resin aqueous dispersion composition having a relatively high resin concentration but a relatively low viscosity without using organic solvents can also be one of the characteristics of the present disclosure.

In step (B), a resin composition comprising a resin having carboxyl groups (preferably a resin having carboxyl groups at its terminals), a basic substance, and an aqueous dispersion medium is mixed with a diluent with a temperature lower than the resin composition. The resin composition before being mixed with the diluent is also referred to as "the pre-diluted resin composition."

The resin composition contains the resin in a molten state. The temperature of the resin composition to be mixed with the diluent is within a range of ±50°C of the melting point of the resin. The upper or lower limit of this range (-50°C to +50°C) may be, for example, -49, -48, -47, -46, -45, -44, -43, -42, -41, - 40, -39, -38, -37, -36, -35, -34, -33, -32, -31, -30, -29, -28, - 27, -26, -25, -24, -23, -22, -21, -20, -19, -18, -17, -16, -15, - 14, -13, -12, -11, -10, -9, -8, -7, -6, -5, -4, -3, -2, -1, 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, or 49°C. For example, this range may be -40°C to +20°C of the melting point of the resin. In the method of the present disclosure, a temperature within a range of ±50°C of the melting point of the resin is interpreted in this sense. This explanation also applies to, for example, a temperature within a range of ±50°C of the melting point of the resin in other steps included in the method of the present disclosure.

Although it depends on the melting point of the resin, the temperature of the resin composition to be mixed with the diluent is preferably about 70 to 200°C, for example. The upper or lower limit of this range may be, for example, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, 160, 161, 162, 163, 164, 165, 166, 167, 168, 169, 170, 171, 172, 173, 174, 175, 176, 177, 178, 179, 180, 181, 182, 183, 184, 185, 186, 187, 188, 189, 190, 191, 192, 193, 194, 195, 196, 197, 198, or 199°C. For example, this range may be 75 to 195°C.

It is considered that because the temperature of the resin composition when mixed with the diluent is within a range of ±50°C of the melting point of the resin contained therein, a resin aqueous dispersion composition having a relatively high resin concentration but a relatively low viscosity can be obtained.

The melting point of a resin is the temperature of the endothermic peak that appears when the resin is heated at a rate of 20°C to 10°C/min under an inert gas atmosphere using a differential scanning calorimeter. However, if two or more endothermic peaks are detected, the temperature of the endothermic peak with the highest peak intensity is used.

The melting point of the resin used is not particularly limited, and is, for example, about 50 to 300°C. The upper or lower limit of this range may be, for example, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, 160, 161, 162, 163, 164, 165, 166, 167, 168, 169, 170, 171, 172, 173, 174, 175, 176, 177, 178, 179, 180, 181, 182, 183, 184, 185, 186, 187, 188, 189, 190, 191, 192, 193, 194, 195, 196, 197, 198, 199, 200, 201, 202, 203, 204, 205, 206, 207, 208, 209, 210, 211, 212, 213, 214, 215, 216, 217, 218, 219, 220, 221, 222, 223, 224, 225, 226, 227, 228, 229, 230, 231, 232, 233, 234, 235, 236, 237, 238, 239, 240, 241, 242, 243, 244, 245, 246, 247, 248, 249, 250, 251, 252, 253, 254, 255, 256, 257, 258, 259, 260, 261, 262, 263, 264, 265, 266, 267, 268, 269, 270, 271, 272, 273, 274, 275, 276, 277, 278, 279, 280, 281, 282, 283, 284, 285, 286, 287, 288, 289, 290, 291, 292, 293, 294, 295, 296, 297, 298, or 299°C. For example, this range may be about 60 to 290°C.

A liquid that can dilute the resin concentration of the pre-diluted resin composition can be used as a diluent. For example, water can be preferably used as the diluent, as with the aqueous dispersion medium described above. Alternatively, for example, a pre-diluted resin composition, prepared beforehand, with a lower resin concentration than the pre-diluted resin composition to be diluted can also be used as the diluent.

The temperature of the diluent is preferably lower than the temperature of the pre-diluted resin composition when mixed with the diluent. Although it depends on the temperature of the pre-diluted resin composition when mixed with the diluent, it is possible to use, for example, a diluent with a temperature lower by 1 to 200°C than the temperature of the pre-diluted resin composition when mixed with the diluent. The upper or lower limit of this temperature range may be lower than the temperature of the pre-diluted resin composition when mixed with the diluent by, for example, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, 160, 161, 162, 163, 164, 165, 166, 167, 168, 169, 170, 171, 172, 173, 174, 175, 176, 177, 178, 179, 180, 181, 182, 183, 184, 185, 186, 187, 188, 189, 190, 191, 192, 193, 194, 195, 196, 197, 198, or 199°C. For example, a diluent with a temperature lower by 5 to 50°C than the temperature of the pre-diluted resin composition when mixed with the diluent may also be used.

More specifically, the diluent is preferably, for example, water of about ordinary temperature (25°C).

The production method of the present disclosure may comprise, before step (B), (A) adjusting the temperature of the pre-diluted resin composition to a temperature equal to or higher than the melting point of the resin contained therein (also referred to as "step (A)"). A pre-diluted resin composition containing the resin in a molten state can be obtained by heating the pre-diluted resin composition to a temperature equal to or higher than the melting point of the resin. The temperature equal to or higher than the melting point is not particularly limited, and is, for example, a temperature higher by 1 to 200°C than the melting point. The upper or lower limit of this temperature range may be higher than the melting point by, for example, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, 160, 161, 162, 163, 164, 165, 166, 167, 168, 169, 170, 171, 172, 173, 174, 175, 176, 177, 178, 179, 180, 181, 182, 183, 184, 185, 186, 187, 188, 189, 190, 191, 192, 193, 194, 195, 196, 197, 198, or 199°C. For example, the temperature may be higher by 10 to 150°C than the melting point.

The amount of the aqueous dispersion medium in the pre-diluted resin composition is, for example, about 30 to 1500 parts by mass based on 100 parts by mass of the resin having carboxyl groups (preferably a resin having carboxyl groups at its terminals, and more preferably a polyamide). The upper or lower limit of this range may be, for example, 40, 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500, 510, 520, 530, 540, 550, 560, 570, 580, 590, 600, 610, 620, 630, 640, 650, 660, 670, 680, 690, 700, 710, 720, 730, 740, 750, 760, 770, 780, 790, 800, 810, 820, 830, 840, 850, 860, 870, 880, 890, 900, 910, 920, 930, 940, 950, 960, 970, 980, 990, 1000, 1010, 1020, 1030, 1040, 1050, 1060, 1070, 1080, 1090, 1100, 1110, 1120, 1130, 1140, 1150, 1160, 1170, 1180, 1190, 1200, 1210, 1220, 1230, 1240, 1250, 1260, 1270, 1280, 1290, 1300, 1310, 1320, 1330, 1340, 1350, 1360, 1370, 1380, 1390, 1400, 1410, 1420, 1430, 1440, 1450, 1460, 1470, 1480, or 1490 parts by mass. For example, this range may be 50 to 1000 parts by mass or 100 to 500 parts by mass.

Since the amount of the aqueous dispersion medium is a ratio relative to the amount of the resin having carboxyl groups, the same may apply to the diluted resin composition (preferably the composition of the present disclosure).

Although it is not particularly limited, the resin concentration of the pre-diluted resin composition is preferably, for example, 40 to 90 mass%. The upper or lower limit of this range may be, for example, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, or 89 mass%. For example, this range may be 45 to 80 mass%. Although it is not particularly limited, the resin concentration of the diluted resin composition (preferably the composition of the present disclosure) is preferably, for example, 20 to 60 mass%. The upper or lower limit of this range may be, for example, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, or 59 mass%. For example, this range may be 30 to 50 mass% or 35 to 45 mass%.

The production method of the present disclosure may further comprise, before step (A), (0) mixing a resin having carboxyl groups at its terminals, a basic substance, and an aqueous dispersion medium to prepare a resin composition (pre-diluted resin composition) (also referred to as "step (0)").

In the pre-diluted resin composition, the resin is preferably melted and dispersed in the aqueous dispersion medium. Such a pre-diluted resin composition can be obtained by, for example, mixing these components to the extent that the resin is dispersed in the aqueous dispersion medium in step (0).

The production method of the present disclosure may further comprise, before step (B), (α) cooling the resin composition to a temperature within a range of ±50°C of the melting point of the resin (also referred to as "step (α)"). When the production method of the present disclosure comprises step (A) and also comprises step (α), the resin composition to be cooled in step (α) is the resin composition that has been adjusted to a temperature equal to or higher than the melting point of the resin contained therein in step (A), and step (α) is thus included after step (A). Since step (α) is a cooling step, the temperature of the resin composition to be cooled can be at least higher than a temperature lower by 50°C than the melting point of the resin (resin melting point - 50°C).

The production method of the present disclosure may further comprise, after step (B), (β) mixing a mixed composition obtained in step (B) with a diluent with a temperature lower than the mixed composition (also referred to as "step (β)"). It is preferable that the production method of the present disclosure further comprises step (β) when the temperature of the mixed composition obtained in step (B) is higher than a temperature lower by 50°C than the melting point of the resin. Although a restrictive interpretation is not desired, when the temperature of the mixed composition obtained in step (B) is lower than the crystallization temperature of the resin, there is a possibility that the resin may crystallize, which makes it easier for the resin to aggregate, and the crystallization may generate heat and raise the temperature of the composition. Accordingly, in such a case, it is particularly preferable that the method of the present disclosure comprises step (β).

In the method of the present disclosure, the method of mixing each component is not particularly limited as long as the effect is not impaired, and known methods can be used. In particular, a method that allows mixing while applying a shearing force is preferable. More specifically, for example, mixing can be preferably performed using a mixing device equipped with a stirring blade. Stirring can be performed, for example, at around 100 to 800 revolutions per minute.

The mixed composition obtained by mixing in step (B) is preferably emulsified. Therefore, the mixing method is preferably a method that allows mixing to the extent that the mixed composition to be obtained is an emulsion composition. In particular, it is preferable that the resin having carboxyl groups is a resin having carboxyl groups at its terminals (preferably a polyamide), because the terminal carbocyclic groups in the resin become hydrophilic alkali salts by the action of the basic substance, and consequently act as a stable emulsifier in water, resulting in a dispersion of fine resin droplets. When step (β) is performed after step (B), the mixed composition to be obtained is preferably emulsified.

By the production method of the present disclosure, a dispersion composition in which a resin having carboxyl groups is dispersed, and which is a resin aqueous dispersion composition having a relatively high resin concentration but a relatively low viscosity (the composition of the present disclosure) can be obtained. The resin aqueous dispersion composition (the composition of the present disclosure) is preferably an emulsion composition.

Although it is not particularly limited, the composition of the present disclosure preferably has a viscosity of 2000 mPa·s or less. The lower limit of the viscosity is not particularly limited, and is preferably 50 mPa·s or more, for example. The upper or lower limit of the viscosity range (50 to 2000 mPa·s) may be, for example, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500, 510, 520, 530, 540, 550, 560, 570, 580, 590, 600, 610, 620, 630, 640, 650, 660, 670, 680, 690, 700, 710, 720, 730, 740, 750, 760, 770, 780, 790, 800, 810, 820, 830, 840, 850, 860, 870, 880, 890, 900, 910, 920, 930, 940, 950, 960, 970, 980, 990, 1000, 1010, 1020, 1030, 1040, 1050, 1060, 1070, 1080, 1090, 1100, 1110, 1120, 1130, 1140, 1150, 1160, 1170, 1180, 1190, 1200, 1210, 1220, 1230, 1240, 1250, 1260, 1270, 1280, 1290, 1300, 1310, 1320, 1330, 1340, 1350, 1360, 1370, 1380, 1390, 1400, 1410, 1420, 1430, 1440, 1450, 1460, 1470, 1480, 1490, 1500, 1510, 1520, 1530, 1540, 1550, 1560, 1570, 1580, 1590, 1600, 1610, 1620, 1630, 1640, 1650, 1660, 1670, 1680, 1690, 1700, 1710, 1720, 1730, 1740, 1750, 1760, 1770, 1780, 1790, 1800, 1810, 1820, 1830, 1840, 1850, 1860, 1870, 1880, 1890, 1900, 1910, 1920, 1930, 1940, 1950, 1960, 1970, 1980, or 1990 mPa·s. For example, the viscosity of the composition of the present disclosure may be 1000 mPa·s or less, or 100 to 1000 mPa·s.

In the present specification, the viscosity is a value measured at ordinary temperature (25°C) using a rotational viscometer (Brookfield DV-II) with rotor No. 3 at a rotation speed of 60 revolutions per minute.

Although it is not particularly limited, the median particle size of the resin having carboxyl groups (preferably a resin having carboxyl groups at its terminals, and more preferably a polyamide) contained in the composition of the present disclosure is preferably about 0.1 to 10 um. The upper or lower limit of this range may be, for example, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, 5, 5.1, 5.2, 5.3, 5.4, 5.5, 5.6, 5.7, 5.8, 5.9, 6, 6.1, 6.2, 6.3, 6.4, 6.5, 6.6, 6.7, 6.8, 6.9, 7, 7.1, 7.2, 7.3, 7.4, 7.5, 7.6, 7.7, 7.8, 7.9, 8, 8.1, 8.2, 8.3, 8.4, 8.5, 8.6, 8.7, 8.8, 8.9, 9, 9.1, 9.2, 9.3, 9.4, 9.5, 9.6, 9.7, 9.8, or 9.9 um. For example, this range may be 0.2 to 5 pm.

The median particle size of the resin contained in the composition of the present disclosure is a value measured by a laser diffraction scattering method. More specifically, this value is measured in such a manner that 20 ml of water and 0.1 g of sodium polyoxyalkylene alkyl ether sulfate are mixed, 0.1 g of a sample (resin aqueous dispersion composition) is added thereto, ultrasonic waves are applied for 3 minutes while stirring with a spatula, and the median particle size is measured with a laser diffraction particle size analyzer (SALD 2300, produced by Shimadzu Corporation).

In the present specification, the term "comprise" or "contain" includes the meanings of consisting essentially of and consisting of. Further, the present disclosure includes any combination of the constituent requirements described here.

In addition, the various characteristics (properties, structures, functions, etc.) described in each embodiment of the present disclosure described above may be combined in any way in specifying the subjects encompassed by the present disclosure. In other words, the present disclosure encompasses all the subjects comprising all combinations of the combinable characteristics described in the present specification.

### Examples

The embodiments of the present disclosure are described with reference to examples in more detail below. However, the embodiments of the present disclosure are not limited to the following examples.

In the following examples, the resin having carboxyl groups used was a polyamide (specifically 6/66/12 copolymer nylon), which was a resin having carboxyl groups at its terminals. This polyamide is melted at a temperature higher than the melting point (85°C) .

### Method for Measuring Median Particle Size

The median particle size of the polyamide in the aqueous dispersion composition was measured in such a manner that 20 ml of water and 0.1 g of sodium polyoxyalkylene alkyl ether sulfate were mixed in a 100-ml beaker, 0.1 g of a sample (aqueous dispersion composition) was added thereto, ultrasonic waves were applied for 3 minutes while stirring with a spatula, and the median particle size was measured with a laser diffraction particle size analyzer (SALD 2300, produced by Shimadzu Corporation).

### Method for Measuring Viscosity

After the obtained aqueous dispersion composition was stored in a thermostatic bath kept constant at 25°C for one hour, the viscosity of the aqueous dispersion composition was measured using a rotational viscometer (Brookfield DV-II) with rotor No. 3 at 60 rpm.

### Preparation of Polyamide Aqueous Dispersion Compositions and Examination

### Example 1

280 g of 6/66/12 copolymer nylon (ratio of terminal carboxyl groups to terminal amino groups: 87/13, terminal carboxyl groups: 120 mmol/kg, melting point: 85°C), 119.06 g of water, and 0.94 g of sodium hydroxide were placed in a 1000-mL pressure-resistant vessel equipped with a stirrer, and the vessel was sealed. Next, while activating the stirrer to stir the mixture at 500 revolutions per minute, the temperature was raised to 160°C. While keeping the internal temperature at 160°C, stirring was further continued for 15 minutes. Then, the content was cooled to 100°C, and 300 g of dilution water at 25°C was added. Then, the content was cooled to 40°C while continuing stirring, and the content was taken out from the pressure-resistant vessel, thereby obtaining the polyamide resin aqueous dispersion of the present invention. The median particle size of the obtained polyamide resin dispersed particles was 0.60 um, and the viscosity was 450 mPa·s.

### Example 2

240 g of 6/66/12 copolymer nylon (ratio of terminal carboxyl groups to terminal amino groups: 87/13, terminal carboxyl groups: 120 mmol/kg, melting point: 85°C), 159.31 g of water, and 0.69 g of sodium hydroxide were placed in a 1000-mL pressure-resistant vessel equipped with a stirrer, and the vessel was sealed. Next, while activating the stirrer to stir the mixture at 500 revolutions per minute, the temperature was raised to 180°C. While keeping the internal temperature at 160°C, stirring was further continued for 15 minutes. Then, the content was cooled to 90°C, and 200 g of dilution water at 25°C was added. Then, the content was cooled to 40°C while continuing stirring, and the content was taken out from the pressure-resistant vessel, thereby obtaining the polyamide resin aqueous dispersion of the present invention. The median particle size of the obtained polyamide resin dispersed particles was 0.55 µm, and the viscosity was 350 mPa·s.

### Example 3

200 g of 6/66/12 copolymer nylon (ratio of terminal carboxyl groups to terminal amino groups: 87/13, terminal carboxyl groups: 170 mmol/kg, melting point: 85°C), 199.18 g of water, and 0.82 g of sodium hydroxide were placed in a 1000-mL pressure-resistant vessel equipped with a stirrer, and the vessel was sealed. Next, while activating the stirrer to stir the mixture at 500 revolutions per minute, the temperature was raised to 160°C. While keeping the internal temperature at 160°C, stirring was further continued for 15 minutes. Then, the content was cooled to 90°C, and 100 g of dilution water at 25°C was added. Then, the content was cooled to 40°C while continuing stirring, and the content was taken out from the pressure-resistant vessel, thereby obtaining the polyamide resin aqueous dispersion of the present invention. The median particle size of the obtained polyamide resin dispersed particles was 0.58 µm, and the viscosity was 480 mPa·s.

### Example 4

240 g of 6/66/12 copolymer nylon (ratio of terminal carboxyl groups to terminal amino groups: 87/13, terminal carboxyl groups: 120 mmol/kg, melting point: 85), 159.08 g of water, and 0.92 g of sodium hydroxide were placed in a 1000-mL pressure-resistant vessel equipped with a stirrer, and the vessel was sealed. Next, while activating the stirrer to stir the mixture at 500 revolutions per minute, the temperature was raised to 160°C. While keeping the internal temperature at 160°C, stirring was further continued for 15 minutes. Then, the content was cooled to 80°C, and 200 g of dilution water at 25°C was added. Then, the content was cooled to 40°C while continuing stirring, and the content was taken out from the pressure-resistant vessel, thereby obtaining the polyamide resin aqueous dispersion of the present invention. The median particle size of the obtained polyamide resin dispersed particles was 0.53 µm, and the viscosity was 560 mPa·s.

### Example 5

240 g of 6/66/12 copolymer nylon (ratio of terminal carboxyl groups to terminal amino groups: 87/13, terminal carboxyl groups: 120 mmol/kg, melting point: 85°C), 158.62 g of water, and 1.38 g of sodium hydroxide were placed in a 1000-mL pressure-resistant vessel equipped with a stirrer, and the vessel was sealed. Next, while activating the stirrer to stir the mixture at 500 revolutions per minute, the temperature was raised to 160°C. While keeping the internal temperature at 160°C, stirring was further continued for 15 minutes. Then, the content was cooled to 80°C, and 200 g of dilution water at 25°C was added. Then, the content was cooled to 40°C while continuing stirring, and the content was taken out from the pressure-resistant vessel, thereby obtaining the polyamide resin aqueous dispersion of the present invention. The median particle size of the obtained polyamide resin dispersed particles was 3.5 um, and the viscosity was 560 mPa·s.

### Example 6

240 g of 6/66/12 copolymer nylon (ratio of terminal carboxyl groups to terminal amino groups: 87/13, terminal carboxyl groups: 160 mmol/kg, melting point: 130°C), 160.71 g of water, and 1.07 g of sodium hydroxide were placed in a 1000-mL pressure-resistant vessel equipped with a stirrer, and the vessel was sealed. Next, while activating the stirrer to stir the mixture at 500 revolutions per minute, the temperature was raised to 160°C. While keeping the internal temperature at 160°C, stirring was further continued for 15 minutes. Then, the content was cooled to 100°C, and 200.89 g of dilution water at 25°C was added. Then, the content was cooled to 40°C while continuing stirring, and the content was taken out from the pressure-resistant vessel, thereby obtaining the polyamide resin aqueous dispersion of the present invention. The median particle size of the obtained polyamide resin dispersed particles was 0.7 um, and the viscosity was 650 mPa·s.

### Comparative Example 1

160 g of 6/66/12 copolymer nylon (ratio of terminal carboxyl groups to terminal amino groups: 87/13, terminal carboxyl groups: 120 mmol/kg, melting point: 85°C), 239.54 g of water, and 0.46 g of sodium hydroxide were placed in a 1000-mL pressure-resistant vessel equipped with a stirrer, and the vessel was sealed. Next, while activating the stirrer to stir the mixture at 500 revolutions per minute, the temperature was raised to 160°C. While keeping the internal temperature at 160°C, stirring was further continued for 15 minutes. Then, the content was cooled to 40°C while continuing stirring, and the content was taken out from the pressure-resistant vessel, thereby obtaining the polyamide resin aqueous dispersion of the present invention. The median particle size of the obtained polyamide resin dispersed particles was 0.80 µm. The viscosity of the polyamide resin aqueous dispersion was extremely high and could not be measured.

### Comparative Example 2

160 g of 6/66/12 copolymer nylon (ratio of terminal carboxyl groups to terminal amino groups: 87/13, terminal carboxyl groups: 120 mmol/kg, melting point: 85°C), 239.08 g of water, and 0.92 g of sodium hydroxide were placed in a 1000-mL pressure-resistant vessel equipped with a stirrer, and the vessel was sealed. Next, while activating the stirrer to stir the mixture at 500 revolutions per minute, the temperature was raised to 160°C. While keeping the internal temperature at 160°C, stirring was further continued for 15 minutes. Then, the content was cooled to 40°C while continuing stirring, and the content was taken out from the pressure-resistant vessel, thereby obtaining the polyamide resin aqueous dispersion of the present invention. The median particle size of the obtained polyamide resin dispersed particles was 2.8 µm, and the viscosity was 2500 mPa·s.

### Comparative Example 3

240 g of 6/66/12 copolymer nylon (ratio of terminal carboxyl groups to terminal amino groups: 87/13, terminal carboxyl groups: 160 mmol/kg, melting point: 130°C), 101.78 g of water, and 1.07 g of sodium hydroxide were placed in a 1000-mL pressure-resistant vessel equipped with a stirrer, and the vessel was sealed. Next, while activating the stirrer to stir the mixture at 500 revolutions per minute, the temperature was raised to 160°C. While keeping the internal temperature at 160°C, stirring was further continued for 15 minutes. Then, the content was cooled to 70°C while continuing stirring, and 257.14 g of dilution water was added; however, the particles aggregated, and a dispersion could not be obtained.

Table 1 shows a summary of the above results.

**Table 1**

| | Resin melting point | NaOH amount | Emulsification temperature | Temperature during dilution | Resin concentration before dilution | Resin concentration after dilution | Median particle size | Viscosity |
|---|---|---|---|---|---|---|---|---|
| | (°C) | (mol/COOH) | (°C) | (°C) | (wt%) | (wt%) | (µm) | (mPa-s) |
| Ex. 1 | 85 | 0.7 | 160 | 100 | 70 | 40 | 0.60 | 450 |
| Ex. 2 | 85 | 0.6 | 180 | 90 | 60 | 40 | 0.55 | 350 |
| Ex. 3 | 85 | 0.6 | 160 | 90 | 50 | 40 | 0.58 | 480 |
| Ex. 4 | 85 | 0.8 | 160 | 80 | 60 | 40 | 0.53 | 560 |
| Ex. 5 | 85 | 1.2 | 160 | 80 | 60 | 40 | 3.5 | 560 |
| Ex. 6 | 130 | 0.7 | 160 | 100 | 60 | 40 | 0.7 | 650 |
| Comp. Ex. 1 | 85 | 0.6 | 160 | - | 40 | 40 | 0.8 | Unmeasurable |
| Comp. Ex. 2 | 85 | 1.2 | 160 | - | 40 | 40 | 2.8 | 2500 |
| Comp. Ex. 3 | 130 | 0.7 | 160 | 70 | 70 | 40 | Aggregated | Aggregated |

## Claims

1. A method for producing a resin aqueous dispersion composition, comprising:
(B) mixing a resin composition comprising a resin having carboxyl groups at its terminals, a basic substance, and an aqueous dispersion medium, with a diluent with a temperature lower than the resin composition,
the resin composition containing the resin in a molten state and having a temperature within a range of ±50°C of the melting point of the resin.

2. A method for producing a resin aqueous dispersion composition, comprising:
(A) adjusting the temperature of a resin composition comprising a resin having carboxyl groups at its terminals, a basic substance, and an aqueous dispersion medium to a temperature equal to or higher than the melting point of the resin; and
(B) mixing the resin composition with a temperature within a range of ±50°C of the melting point of the resin, with a diluent with a temperature lower than the resin composition.

3. The method according to claim 1, further comprising, before step (B):
(α) cooling the resin composition to a temperature within a range of ±50°C of the melting point of the resin.

4. The method according to claim 2, further comprising, between steps (A) and (B):
(α) cooling the resin composition to a temperature within a range of ±50°C of the melting point of the resin.

5. The method according to any one of claims 1 to 4, wherein when the temperature of a mixed composition obtained in step (B) is higher than a temperature lower by 50°C than the melting point of the resin, the method further comprises:
(β) mixing the mixed composition with a diluent with a temperature lower than the mixed composition.

6. The method according to any one of claims 1 to 5, wherein the resin having carboxyl groups at its terminals has a melting point of 50 to 300°C.

7. The method according to any one of claims 1 to 6, wherein in step (B), the temperature of the resin composition mixed with the diluent is 70 to 200°C.

8. The method according to any one of claims 1 to 7, wherein the resin having carboxyl groups at its terminals is a polyamide.

9. The method according to claim 8, wherein the polyamide has a ratio of terminal carboxyl groups to terminal amino groups of 66/34 to 92/8, and the terminal carboxyl groups are present in an amount of 90 to 170 mmol per kg.

10. The method according to any one of claims 1 to 9, wherein in the resin composition comprising a resin having carboxyl groups at its terminals, a basic substance, and an aqueous dispersion medium to be subjected to step (B), the resin is melted and dispersed in the aqueous dispersion medium.

11. The method according to any one of claims 1 to 10, wherein the resin aqueous dispersion composition is an emulsion composition.

12. An aqueous dispersion composition of a polyamide, the resin dispersed in the composition having a median particle size of 0.1 to 10 µm, and the composition having a resin concentration of 20 to 60 mass% and a viscosity of 2000 mPa·s or less.

13. The composition according to claim 12, which is an aqueous dispersion composition of a polyamide, wherein the resin dispersed in the composition has a median particle size of 0.2 to 5 um, and the composition has a resin concentration of 30 to 50 mass% and a viscosity of 100 to 1000 mPa·s.

14. The composition according to claim 12 or 13, wherein the polyamide has a ratio of terminal carboxyl groups to terminal amino groups of 66/34 to 92/8, and the terminal carboxyl groups are present in an amount of 90 to 170 mmol per kg.
